Europäisches Patentamt

(19) European Patent Office

Office européen des brevets

(11) Publication number: **0 071 331**

**A2**

(12) **EUROPEAN PATENT APPLICATION**

(21) Application number: **82302907.9**

(22) Date of filing: **04.06.82**

(51) Int. Cl.³: **A 23 K 1/00**
**A 23 K 1/18, A 23 P 1/00**

(30) Priority: **29.07.81 US 288227**
**29.07.81 US 288246**

(43) Date of publication of application:
**09.02.83 Bulletin 83/6**

(84) Designated Contracting States:
**AT BE CH DE FR GB LI LU NL SE**

(71) Applicant: **RALSTON PURINA COMPANY**
**Checkerboard Square**
**St. Louis Missouri 63164(US)**

(72) Inventor: **Sachs, Jerome Allen**
**5651 B Golf Ridge Drive**
**St. Louis Missouri 63128(US)**

(72) Inventor: **Kummer, Charles Karl**
**95 West Moreland**
**Collinsville Illinois 62234(US)**

(72) Inventor: **Bosko, Michael Steven**
**5365 Camelot Estates Drive**
**Mehlville Missouri 63129(US)**

(74) Representative: **Tubby, David George et al,**
**MARKS & CLERK 57-60 Lincoln's Inn Fields**
**London WC2A 3LS(GB)**

(54) A process for preparing a soft moist food product.

(57) A proteinaceous-farinaceous mixture containing at least 40% by weight of the farinaceous component and a moisture content sufficient for extrusion is subjected to mechanical working under conditions of elevated pressure and a temperature of at least 212°F (100°C) to convert the mixture to a flowable, thermoplastic state, is then extruded through a restricted orifice into a confinement zone, where it is confined whilst in the flowable state, and is then injected into a compression zone, where it is cooled to a temperature of from 100°F (37.8°C) to 180°F (82.2°C) and compressed to form a product having a dense, elastic structure. If desired, this product can be puffed by heating, e.g. at a temperature of from 225°F (107.2°C) to 275°F (135°C), to give a product having an expanded shell and, at the centre, a product having essentially the original dense, elastic structure.

EP 0 071 331 A2

# A PROCESS FOR PREPARING A SOFT MOIST FOOD PRODUCT

The present invention relates to a process for preparing a soft moist food product, especially a soft moist pet food product and provides products of this type having a choice of unique structures.

A variety of pet food products have been produced on extrusion equipment. These products have ranged from dried, expanded pet foods to the soft moist (also called semi-moist or intermediate moisture) pet foods, which can be either expanded or non-expanded. The formulation for both the dry and soft moist types of product is generally essentially the same and such products normally contain varying amounts of proteinaceous and farinaceous ingredients, together with fats, minerals and vitamins. In addition, the soft moist products also include a significant quantity of water (generally from 20 to 35% by weight), together with other materials which are included to preserve the pet food against microbial or mycotic penetration. These preservative materials, which are typically added to soft moist pet foods, have included sugars, sugar alcohols, humectants (such as polyhydric alcohols) and edible acids, in addition to conventional antimycotics to avoid mycotic penetration of the product. Some of these materials not only provide protection from microbial attack by altering the water activity, but also give the product a soft texture.

Soft moist products containing preservative materials of the types described above and having the type of formulation described above can be easily expanded by processing the ingredients in an extruder in the presence of sufficient moisture and under conditions of elevated temperature and pressure to convert the ingredients to a thermoplastic mass. This mass, upon becoming thermoplastic in the extruder, is then extruded through a die or restricted orifice into a zone of lower pressure, usually atmospheric. The pressure release causes vaporization of a portion of the moisture in the product, thus causing significant expansion of the mixture. Usually the temperature of the mixture in the extruder is at least 107.2°C (225°F). Expanded soft moist pet food products of this type and processes for their production are illustrated in U.S. Patent Specifications No. 3,653,908, No. 3,745,021, No. 4,022,915, No. 4,162,336 and No. 4,011,345.

Non-expanded soft moist pet foods, although containing the same general ingredients, are produced in extrusion equipment under somewhat different conditions. These conditions involve the use of significantly lower temperatures and pressures during extrusion, in order to avoid superheating of the moisture and expansion of the product upon pressure release. This type of process is illustrated in U.S. Patent Specifications No. 3,225,114, No. 3,615,652 and No. 4,055,681. The temperatures employed in this type of process are usually just sufficient to pasteurize the mixture. Heating is then followed immediately by air-cooling of strands of the product as it leaves the die of the extruder. This type of product has little, if any, expansion, since the mixture does not achieve a thermoplastic state in the extruder and since the moisture does not become superheated by the application of relatively high temperatures and pressures, thus causing expansion upon pressure release.

In spite of the success of both the expanded and the non-expanded types of soft moist pet food in the marketplace, a need still exists for a nutritionally complete soft moist pet food which not only has a soft appearance but also has a dense, elastic and chewy structure. Such a product would not only be suitable as a complete ration for pets but also could be formed into shapes and/or configurations suitable as treats for pets.

Thus, the present invention consists in a process for producing a food product by subjecting a proteinaceous-farinaceous mixture in which the farinaceous component comprises at least 40% by weight (based on the weight of the final food product) and which has a moisture content sufficient for extrusion to mechanical working under conditions of elevated pressure and a temperature of at least 212°F (100°C) to convert the mixture to a flowable, thermoplastic state, and extruding the flowable mixture through a restricted orifice, characterized in that the mixture is extruded from the restricted orifice into a confinement zone, is confined in said zone while in a flowable state and is then injected into a compression zone where it is cooled to a temperature of from 100°F (37.8°C) to 180°F (82.2°C) and compressed to form a product having a dense, elastic structure.

This product will preferably have a final moisture content of from 16 to 50% by weight. The resulting dense, elastic, soft moist food product, preferably pet food product, is suitable for use as a complete ration for pets, provided that the starting material comprises a nutritionally balanced mixture of proteinaceous and farinaceous ingredients. The unique texture of this product permits the production of materials of various shapes and configurations which are suitable for use as treats for pets and which have an elastic, chewy texture that is highly appealing.

Although this product in itself is most desirable to pets because of its elastic, chewy texture, we have surprisingly found that, if the product is dried in an oven, an unusual textural change takes place. Although one would normally expect some degree of.puffing from subsequent heating of a product of this type, it was found that a unique textural change took place when the product was dried. The exterior surface of the product puffed to provide an expanded shell with a dense, elastic, chewy centre and, what is more, this puffing took place at a much lower temperature than would normally be expected, i.e. below 275°F (135°C). Normally, it is necessary to employ temperatures of from 375°F (190.6°C) to 450°F (232.2°C) in order to puff products in a drier and such an unusual puffing effect is not achieved. The resulting product is comparable to a puffed pastry shell with a dense centre, although the skin is tougher and more chewy than the type of puffed product one would achieve with a pastry dough. The product is extremely attractive to pets because of its expanded shell and its chewy, dense centre. Another significant advantage of this product having an expanded shell is that a liquid, semi-liquid or soft filling may be injected into the cavity created by separation of the shell from the chewy, dense centre. This gives a desirable dual-textured product with an elastic, chewy shell and a soft filling in the interior.

Thus, in one embodiment of the invention, the product having a dense, elastic structure obtained as described above is subsequently puffed by heating to provide an expanded shell with a dense, elastic structure in the centre of the shell.

The mixture used as a starting material in the process of the invention is a mixture of proteinaceous and farinaceous ingredients at least, although, in order to make the product nutritionally complete, we prefer that it should also contain fats, vitamins and minerals in amounts appropriate to the animal for which the product is designed. The content of farinaceous ingredients in this mixture should be at least 40% by weight and is preferably from 40 to 80% by weight, more preferably from 60 to 80% by weight, and most preferably from 65 to 80% by weight. These percentages are based on the weight of the product having a dense, elastic structure formed after compression in the compression zone, as are all percentages herein, except for moisture content, which is based upon the actual weight of materials.

Suitable farinaceous ingredients include one or more of the following grains, such as grain wheat, barley or oats, or their milled counterparts, such as corn meal, flour, wheat germ or grits.

The proteinaceous-farinaceous mixture will also include at least one suitable proteinaceous ingredient, which will normally be chosen in order to provide a suitable balance of essential amino acids and whose nature may also depend upon the materials most conveniently available at the location where the product is to be made. Suitable proteinaceous ingredients include: vegetable protein materials, particularly such materials derived from the oilseeds (such as soybeans or cottonseeds), including oilseed meals, isolates, concentrates and flours; proteinaceous by-product meals, such as meat meal, poultry meal or fish meal; yeasts or microbial protein, such as torula yeast or brewers yeast; and dairy proteins, such as casein and the caseinates. Of these, the vegetable protein materials and proteinaceous by-product meals are particularly preferred.

The proteinaceous-farinaceous mixture employed in the process of the invention may also contain fresh meat as an ingredient, as it is not necessary that the proteinaceous ingredient should be limited to proteinaceous sources which have been dried or otherwise treated in some fashion. The term "fresh meat" as used herein refers not only to conventional sources of meat, for example the flesh of cattle, swine, sheep, goats and horses, but also the flesh of whales and other mammals, as well as poultry, fish, etc. The term "fresh" is intended to exclude dried or rendered products, such as meat meal or bone meal. The amount of fresh meat in the proteinaceous-farinaceous mixture of the present invention is preferably chosen so as not to increase the moisture content of the mixture to a value greater than 50% by weight.

In general, we prefer that the amount of proteinaceous ingredient in the starting mixture should be from 18 to 35% by weight of the product, and more preferably from 20 to 30% by weight.

The selection of the exact proteinaceous or farinaceous ingredients employed in the present invention will be entirely dependent upon the level and balance of various nutrients in the ration. The exact selection of these materials is well within the skill of one in the art of pet food processing or formulation. As will be apparent, the product of the present invention includes a substantial percentage of farinaceous ingredients, as compared to proteinaceous ingredients, and it is believed to be unique that the product has such a dense, elastic and chewy texture, in view of the relatively low percentage of protein in the mixture.

If desired, additional nutrient materials may be included in the proteinaceous-farinaceous mixture or may be added to the mixture after extrusion. One such material is fat, which may be any of the edible fats, either animal or vegetable.

The total amount of fat present in the product will normally be from 0 to 10% by weight of the product, depending upon the amount of fat present in the proteinaceous and farinaceous ingredients. Typically, the amount of fat added to the product will be from 4 to 10% by weight.

Other preferred ingredients which may be incorporated into the proteinaceous-farinaceous mixture employed in the process of the present invention include flavour ingredients, hydrolised protein, salt, colouring ingredients or dyes, fibrous ingredients (such as soybean hulls), vitamins and other nutrients. Other materials which may be added to the mixture to be extruded include various materials (such as rice, uncooked corn pieces or fibrous pieces, such as textured vegetable protein pieces) which provide particles of a contrasting texture in the dense elastic product of the present invention.

Normally, in order to preserve the product, it is also necessary to include in the mixture various preservatives, plasticizing and/or humectant materials, commonly used in soft moist foods. Typical plasticizers or humectants which may be employed include polyhydric alcohols (such as glycerol, sorbitol, or propylene glycol) and other, more complex, "sugar" alcohols. It is also possible to include various other humectants, such as molasses, corn syrup solids, dextrose, invert sugar and other sugar derivatives, in order to provide the product of the present invention with a soft texture following extrusion.

Also, in order to minimize microbial or mycotic penetration of the product, it is desirable to incorporate certain antimycotics and/or preservatives either prior to or subsequent to extrusion. Suitable antimicrobial agents include food grade edible acids, such as phosphoric, tartaric, maleic, citric, fumaric, hydrochloric and other edible acids, which alter the pH value of the product to a level substantially below neutral, in order to provide bacteriostatic protection for the product. The amount of such acid is preferably sufficient to provide a product having a pH value of from 2.5 to 5.0. Also, because the product will normally have a relatively high level of moisture, it is desirable to include various antimycotics, such as sorbic acid compounds (e.g. potassium sorbate or sorbic acid itself), propionic acid, benzoic acid or crotonic acid or compounds thereof. Typically, the amount of antimycotic employed in the product of the invention will not exceed 1% by weight, and usually the amount will be from 0.25 to 0.75% by weight.

As noted above, the antimycotics and/or preservatives may be added to the proteinaceous-farinaceous mixture prior to extrusion or they may be applied to the surface of the product after carrying out the process of the invention.

Following formulation of the mixture of proteinaceous and farinaceous ingredients, but prior to extrusion, the moisture content of the mixture may, if necessary, be adjusted to a level suitable for extrusion of the mixture; this will normally be within the range from 18 to 35% by weight and is preferably from 20 to 30% by weight. Depending upon the exact type of equipment used in the process of the present invention, the water added may be in the form of moisture and/or steam and it is typically added to the proteinaceous-farinaceous mixture in a preconditioning section of the extruder, in which some degree of mixing between the added moisture and the ingredients of the proteinaceous-farinaceous mixture takes place before the mechanical working in the extruder.

After adjustment, if necessary, of the moisture content of the proteinaceous-farinaceous mixture, the material is passed into an extruder, where it is subjected to a temperature in excess of 212°F (100°C), typically from 225°F to 350°F (107.2-176.7°C) and more preferably from 225°F to 250°F (107.2-121.1°C), under conditions of elevated pressure in order to convert the proteinaceous-farinaceous mixture into a plastic, flowable and substantially homogeneous state. The present invention is not limited to any specific type of apparatus for use in this step and various types of extruder are well known to those skilled in the art of pet food processing. Such extruders typically include a heating section which contains a screw of decreasing volume, in order to increase the degree of working and agitation for the mixture to be extruded. The material in the extrusion section is subjected to conditions of elevated temperature and pressure, thus converting the material in it into a thermoplastic or flowable state.

Following extrusion of the material from the extruder where it has been converted to a flowable, thermoplastic state under the above-mentioned conditions of elevated temperature and pressure, the material passes through the die of the extruder into a confinement zone, in which the conditions of elevated temperature and pressure that exist in the heating zone of the extruder are maintained. This zone usually consists of a flexible or rigid piece of tubing provided between the end of the extruder and a compression zone, which is described in more detail hereafter.

Upon leaving the die of the extruder, the proteinaceous-farinaceous mixture, which is in a flowable or thermoplastic state, is maintained in this state under conditions of elevated temperature and pressure comparable with those existing in the extruder by preventing the material from being exposed to atmospheric temperature and pressure. This permits injection of the proteinaceous-farinaceous mixture whilst in the flowable state into a separate compression zone, which is simultaneously cooled to achieve a product temperature for the mixture of from 100°F to 180°F (37.8-82.2°C), preferably from 110°F to 150°F (43.3-65.6°C). The exact equipment employed as the compression zone in the process of the present invention is not critical and examples of such apparatus include a heat-exchanger or extruder which contains a conventional helical extruder screw, which provides compression for the proteinaceous-farinaceous mixture whilst it is being cooled. Preferably, this apparatus comprises an extruder in which the compression zone provides a compression ratio of at least 1.75:1 and more preferably from 1.75:1 to 2.0:1.

Thus, when the proteinaceous-farinaceous mixture, in a flowable state, is injected into the compression zone, it is cooled to a temperature of from 100°F (37.8°C) to 180°F (82.2°C). Injection of the flowable mixture into the compression zone causes a severe drop in temperature to a value within the above-noted range and prevents significant expansion of the product. At the same time, the compression action of the screw in the compression zone agitates the mixture and compresses and forms it to provide the product of the present invention with a dense, but highly elastic, structure.

In view of the high percentage of farinaceous materials contained in the product, it is believed that this structure is quite unique, since the product not only has a highly resilient or chewy texture, but is quite dense in appearance. The product produced is, therefore, suitable either as a complete ration for pets or, depending upon the shape and configuration, it can also be a "treat" product.

Although this product is, in itself, a useful and attractive food product, especially for animals, it can, if desired be subjected to the optional "puffing" step of the present invention, to provide a product having a different type of structure. First of all, if necessary, the product is subdivided and optionally shaped to give pieces of the desired shape or configuration. The product is then heated at a temperature sufficient to puff or expand the shell of the product, typically a temperature from 225°F (107.2°C) to 275°F (135°C). Heating within this temperature range, preferably in an oven, creates an unusual textural effect, because of expansion of the exterior surface of the product, but the retention of a dense, elastic, chewy interior. The exterior surface puffs to provide an expanded shell having an attractive shiny surface appearance. This dual-textured product has appeal to pets either as a complete ration or as a "treat" type of product.

The invention is further illustrated by the accompanying drawings, in which:

Figure 1 illustrates the apparatus which may be employed in carrying out the process of the invention; and

Figure 2 is a cross-sectional view of a typical puffed product produced after the optional puffing step of the invention, showing the expanded shell and a dense, elastic interior.

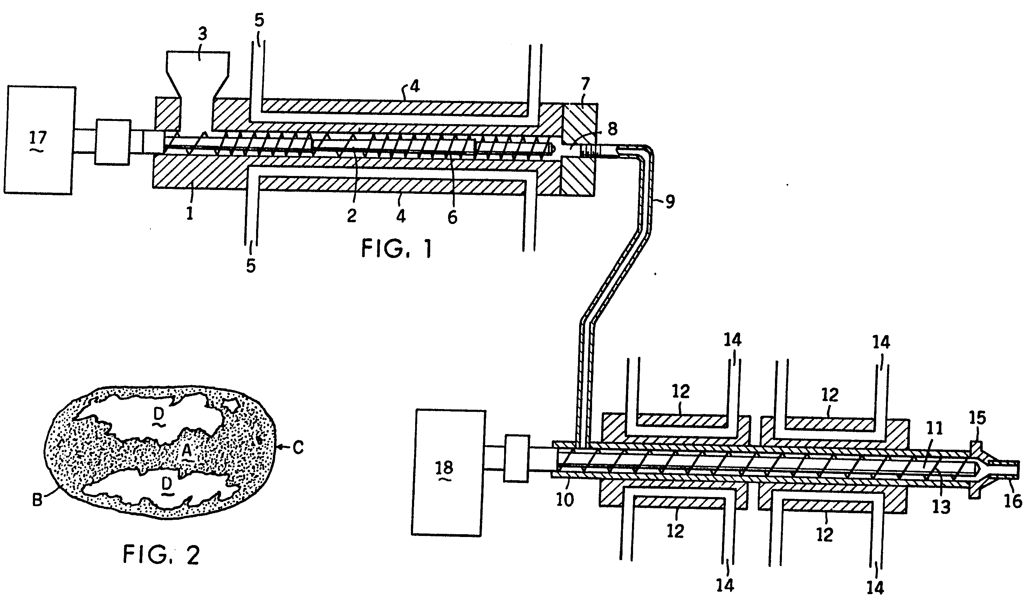

Referring first to Figure 1 of the accompanying drawings, the proteinaceous-farinaceous mixture, whose moisture content

- 16 -

has, if necessary, previously been adjusted to an appropriate value preferably within the range from 18 to 35% by weight, is fed into an extruder, which comprises a heating zone 1 having an inlet section 3 and a screw section 2, which consists of a screw having a varying root diameter throughout the screw section with flights 6 on the screw having varying degrees of pitch. The screw section 2 is surrounded by one or more heating or cooking jackets 4, in which steam or liquid can be circulated by circulation means 5 to provide a means of raising the temperature in the heating zone of the extruder. At the exit end of the heating zone is mounted a die section 7, which includes a restricted orifice 8.

The moisture-adjusted proteinaceous-farinaceous mixture is fed through inlet section 3 into screw section 2 of the extruder, where it is mechanically worked and agitated under conditions of elevated temperature determined principally by the temperature of the heating jackets 4. The varying root diameter and pitch of the screw flights 6 provide the necessary combination of restriction and/or mechanical working to produce elevated pressure within the heating zone 1 and thereby to convert the mixture to a flowable or thermoplastic state. The die section 7 with its restricted orifice 8 provides sufficient back pressure within the heating zone 1 to ensure the necessary increase in pressure within the heating zone.

The mixture, which is in a flowable state upon reaching the die section 7, passes through the restricted orifice 8 and, rather than being released to the atmosphere (as would be done to provide an "expanded" product), is confined within the confinement zone 9 under substantially the same conditions of temperature and pressure that exist in the heating zone. This confinement of the mixture while in a flowable or thermoplastic state without exposure to the atmosphere is believed to contribute significantly to the dense, elastic structure of the product of the invention.

The material is conveyed through the confinement zone and injected into a compression zone, which typically comprises a heat exchanger or extruder 10, which can be cooled by jackets 12 containing coolant, which is continuously recirculated through tubing 14. The compression zone comprises a compression screw 11 in a screw section to convey the mixture through the zone. The screw 11 is a compression screw having a tapered root diameter throughout the screw section with a compression ratio of at least 1.75:1, preferably from 1.75:1 to 2.0:1. The flights 13 of this screw have a constant pitch throughout the screw section. A die 15 and a restricted orifice 16 are included at the end of the extruder forming the compression zone, in order to ensure compression of the mixture as it is being cooled to within the range from 100°F (37.8°C) to 180°F (82.2°C), preferably from 110°F (43.3°C) to 150°F (65.6°C), resulting in a product having a dense but elastic structure, even though the mixture has a high percentage of farinaceous materials.

The screw of screw section 2 in the first extruder is driven by a variable speed drive unit 17, whilst the screw 11 of the second extruder is driven by a variable speed drive unit 18.

If desired, this product, preferably after being subdivided into the desired shape or configuration, can be puffed in a suitable heating zone, such as a drying oven, to provide a product of the type illustrated in Figure 2. This shows a product C, which has been puffed and then sliced through the middle, to show a dense, elastic centre A, surrounded by an expanded shell or exterior surface B, to form an empty cavity D. This provides a product having a basically light and desirable appearance but with a dense, elastic and chewy interior.

The expanded shell of this product creates an internal cavity, which can advantageously be employed to provide a unique dual-textured product. This can be achieved by injecting or otherwise inserting into the cavity a filling, which can range from a liquid gravy or broth to a viscous, soft filling. The nature of the filling is not critical to the present invention and any such filling, of types which are well known in the art, can be employed, including gravy or broth mixtures with or without thickeners. The equipment used for introducing this filling into the product is well known and can include injection equipment providing for penetration of the product and insertion of a flowable filling of some type.

The invention is further illustrated by the following Examples.

## EXAMPLE 1

A nutritionally complete beef-flavoured pet food for dogs was prepared by initial formulation of the following mixture (percentages are by weight, based on the weight of the final product):

| Wheat flour | 61.68% |
| Soybean flour 44% protein | 12.00% |
| Corn gluten meal | 6.20% |
| Meat and bone meal | 5.50% |
| Animal fat | 3.00% |
| Hydrogenated corn syrup | 4.00% |
| Phosphoric acid | 1.00% |
| Tricalcium phosphate | 2.00% |
| Fumaric acid | 1.50% |
| Sorbic acid | 0.50% |
| Propionic acid | 0.50% |
| Vitamins and minerals | 2.20% |

The dried materials were blended, and then the liquid ingredients were added and the whole was mixed for a further 5 minutes. The mixture was then fed into a preconditioner, where moisture was added, to adjust the moisture content of the mixture to 25% by weight. The moisture-adjusted mixture was then fed into an extruder equipped with an auger-type conveying screw, where it was converted to a thermoplastic state under conditions of elevated pressure and with a jacket temperature of 225°F (107.2°C). The mixture, whilst still in a flowable state was extruded through the die of the extruder and into a confinement zone consisting of a section of flexible hose of outside diameter 1.5 inches (3.8 cm) attached between the die outlet and the inlet of a second extruder.

The second extruder contained a compression screw having a tapered root diameter with a compression ratio of at least 1.75:1 and had cooling jackets containing water at a temperature of 70°F (21.1°C). This cooled the product in the second extruder to a product temperature of about 120°F (48.9°C) whilst the material was conveyed through the extruder and compressed by being forced through a restricted orifice into the atmosphere.

On leaving the die of this second extruder the product, in the form of an essentially continuous "rope", was contacted with a rotating knife blade, which subdivided the product into integral pieces of material.

These pieces were then sprayed with a mixture including phosphoric acid, vitamins A and E and fat. The amount of mixture was sufficient to provide 2% by weight phosphoric acid and 0.5% by weight additional fat in the final product.

This product had a soft, dense, elastic structure with a highly appealing texture. The product had a moisture content of 20% by weight and a bulk density of 44 lb/ft$^3$ (0.71 g/cm$^3$).

## EXAMPLE 2

The procedure described in Example 1 was repeated, up to and including subdivision of the continuous rope leaving the second extruder into integral pieces.

These pieces were then conveyed to a drying oven maintained at a temperature of 250°F (121.1°C). The product was dried at this temperature for 15 minutes. This resulted in expansion of the shell of the product but with the retention of a dense, elastic structure in the centre of the expanded or puffed product. The product had a moisture content below 20% by weight. The product was then sprayed with the same mixture as used in Example 1, to provide an additional 2% phosphoric acid and 0.5% fat on the final product.

## EXAMPLE 3

A nutritionally complete cheese-flavoured pet food for dogs was prepared by initial formulation of the following mixture (percentages are by weight, based on the weight of the final product):

| | |
|---|---|
| Wheat flour | 66.36% |
| Soy protein isolate | 16.50% |
| Cheese meal | 5.00% |
| Animal fat | 2.00% |
| Phosphoric acid | 2.25% |
| Calcium carbonate | 2.50% |
| Propylene glycol | 1.50% |
| Fumaric acid | 1.50% |
| Sorbic acid | 0.50% |
| Salt | 0.70% |
| Vitamins & Minerals | 1.20% |

The dried ingredients were blended, and then the liquid ingredients were added and all ingredients were mixed for a further 5 minutes. The mixture was then treated as described in Example 1, to produce a product having a soft, dense, elastic structure with a highly appealing texture. The subdivided product had a moisture content of 22% by weight and a bulk density of 44 lb/ft$^3$ (0.71 g/cm$^3$).

## EXAMPLE 4

The mixture described in Example 3 was treated as described in Example 2, to give a product having an expanded shell but retaining a dense, elastic structure in its centre.

## EXAMPLE 5

An expanded product produced as described in Example 2 was injected with a gravy-like mixture comprising 49.75% water, 49.75% brown gravy seasoning F13262 (manufactured by McCormack Flavor Division, Hunt Valley, Maryland 21031, U.S.A.) and 0.50% potassium sorbate. The mixture was injected into the hollow interior cavity of the product with a syringe and provided a product having a chewy shell with a dense centre surrounded by a gravy-like liquid.

CLAIMS

1.        A process for producing a food product by subjecting a proteinaceous-farinaceous mixture in which the farinaceous component comprises at least 40% by weight (based on the weight of the final food product) and which has a moisture content sufficient for extrusion to mechanical working under conditions of elevated pressure and a temperature of at least 212°F (100°C) to convert the mixture to a flowable, thermoplastic state, and extruding the flowable mixture through a restricted orifice, characterised in that the mixture is extruded from the restricted orifice into a confinement zone, is confined in said zone while in a flowable state and is then injected into a compression zone where it is cooled to a temperature of from 100°F (37.8°C) to 180°F (82.2°C) and compressed to form a product having a dense, elastic structure.

2.        A process according to Claim 1, in which said proteinaceous-farinaceous mixture has a moisture content of from 18 to 35% by weight.

3.        A process according to Claim 2, in which said moisture content is from 20 to 30% by weight.

4.      A process according to any one of the preceding claims, in which said product having a dense, elastic structure has a moisture content of from 16 to 50% by weight.

5.      A process according to any one of the preceding claims, in which said proteinaceous-farinaceous mixture contains from 40 to 85% by weight of a farinaceous component (based on the weight of the final food product).

6.      A process according to Claim 5, in which the amount of farinaceous component is from 60 to 85% by weight.

7.      A process according to any one of the preceding claims, in which said proteinaceous-farinaceous mixture contains from 18 to 35% by weight of a proteinaceous component (based on the weight of the final food product).

8.      A process according to Claim 7, in which the amount of proteinaceous component is from 20 to 30% by weight.

9.      A process according to any one of the preceding claims, in which the proteinaceous component of said proteinaceous-farinaceous mixture comprises fresh meat.

10.     A process according to any one of the preceding claims, in which the proteinaceous component of said proteinaceous-farinaceous mixture comprises a vegetable protein material.

11.     A process according to any one of the preceding claims, in which said mixture is extruded at a temperature of from 225°F (107.2°C) to 350°F (176.7°C).

12.     A process according to any one of the preceding claims, in which said mixture is extruded at a temperature of from 225°F (107.2°C) to 250°F (121.1°C).

13.     A process according to any one of the preceding claims, in which the product in said compression zone is cooled to a temperature of from 110°F (43.3°C) to 150°F (65.6°C).

14.     A process according to any one of the preceding claims, in which said compression zone comprises an extruder with a screw having a compression ratio of at least 1.75:1.

15.     A process according to Claim 14, in which said compression ratio is from 1.75:1 to 2.0:1.

16.     A process according to any one of the preceding claims, in which said product having a dense, elastic structure is subsequently puffed by heating to provide an expanded shell with a dense, elastic structure in the centre of said shell.

17.     A process according to Claim 16, in which the puffing is effected at a temperature of from 225°F (107.2°C) to 275°F (135°C).

18.     A process according to Claim 16 or Claim 17, in which a filling is injected into the product between said shell and said dense, elastic structure.

FIG. 1

FIG. 2